# EUROPEAN PATENT APPLICATION

(11) **EP 3 680 838 A1**
(43) Date of publication of application: **15.07.2020**
(21) Application number: 18853776.5
(22) Date of filing: 03.07.2018
(51) Int. Cl.: G06Q 10/10

(54) **INFORMATION PROCESSING DEVICE AND INFORMATION PROCESSING METHOD**

(30) Priority: 08.09.2017 JP 2017173441
(71) Applicant: Sony Corporation, Tokyo 108-0075 (JP); Sony Mobile Communications Inc., Shinagawa-ku Tokyo 140-0002 (JP)
(72) Inventor: KIRIHARA, Reiko, Tokyo 108-0075 (JP); TAKAHASHI, Norihiro, Tokyo 108-0075 (JP); YOKOYAMA, Saki, Tokyo 108-0075 (JP); HOSOKAWA, Satoshi, Tokyo 140-0002 (JP)
(74) Representative: MFG Patentanwälte Meyer-Wildhagen Meggle-Freund Gerhard PartG mbB
(86) International application number: PCT/JP2018/025131
(87) International publication number: WO 2019/049491

(57) **Abstract**

[Problem] To make it possible to create more appropriate action plan of a plurality of users on the basis of a relationship among the plurality of users.

[Solution] There is provided an information processing apparatus including a relationship estimation unit configured to estimate a relationship among a plurality of users on the basis of sensing data, and an action plan creation unit configured to create an action plan of the plurality of users on the basis of a result of the estimation.

## Description

### Field

The present disclosure relates to an information processing apparatus and an information processing method.

### Background

An action plan for a plurality of users to act together has been created in consideration of information regarding a schedule, attributes, preference, or the like of each user, traffic information (for example, information regarding operating hours, a delay, or the like of transportation), spot information (for example, information regarding a location, opening hours, a fee, barrier-free access availability, or the like of a facility), environmental information (for example, information regarding weather, temperature, wind velocity, hours of sunlight, an earthquake, tsunami, heavy rain, flood, fire, or the like), and so on. In addition, when a plan is carried out, changing the action plan is sometimes required due to the occurrence of an unexpected situation or the like. For example, a case may arise where bad weather does not allow a user to carry out the plan at the time when the plan is carried out, a case may arise where traffic congestion does not allow the user to reach a destination even if estimated time is reached, and so on.

In recent years, technologies have been developed for supporting or automating creation of action plans. For example, Patent Literature 1 below discloses a technology which enables, in a case where an action plan is changed in the middle of a way to a destination, route guidance that is easy for a user to understand, and is simple, efficient, interactive, and enjoyable.

### Citation List

### Patent Literature

Patent Literature 1: JP 2008-077311 A

### Summary

### Technical Problem

However, according to the technology of Patent Literature 1 and so on, it is impossible to create an action plan suitable for a plurality of users on the basis of a relationship among the plurality of users. More specifically, the technology disclosed in Patent Literature 1 can determine a route from a place of departure to a destination on the basis of preference information and the like of an identified user; however, cannot perform such processing on the basis of the relationship among the plurality of users.

In view of this, in the present disclosure, new and improved information processing apparatus and information processing method are proposed which enable creation of an action plan more suitable for a plurality of users on the basis of a relationship among the plurality of users.

### Solution to Problem

According to the present disclosure, an information processing apparatus is provided that includes: a relationship estimation unit configured to estimate a relationship among a plurality of users on the basis of sensing data; and an action plan creation unit configured to create an action plan of the plurality of users on the basis of a result of the estimation.

Moreover, according to the present disclosure, an information processing method is provided that includes: estimating, by a processor, a relationship among a plurality of users on the basis of sensing data; and creating an action plan of the plurality of users on the basis of a result of the estimation.

Moreover, according to the present disclosure, an information processing apparatus is provided that includes: a transmission unit configured to transmit sensing data; and a reception unit configured to receive, in response to a relationship among a plurality of users estimated on the basis of the sensing data, information regarding an action plan of the plurality of users created on the basis of a result of the estimation.

### Advantageous Effects of Invention

As described above, according to the present disclosure, it is possible to create an action plan more suitable for a plurality of users on the basis of a relationship among the plurality of users.

Note that the effects described above are not necessarily limitative. With or in the place of the above effects, there may be achieved any one of the effects described in this specification or other effects that may be grasped from this specification.

### Brief Description of Drawings

FIG. 1 is a diagram illustrating an example of the configuration of an information processing system according to an embodiment of the present disclosure.
FIG. 2 is a block diagram illustrating an example of the functional configuration of an information processing terminal 10.
FIG. 3 is a block diagram illustrating an example of the functional configuration of an information processing server 20.
FIG. 4 is a diagram illustrating an example of information in which a relation among a plurality of users and suggested contents are correlated to each other.
FIG. 5 is a diagram illustrating an example of information in which a relation among a plurality of users and suggested contents are correlated to each other.
FIG. 6 is a diagram illustrating an example of preference information 212a.
FIG. 7 is a diagram illustrating an example of a task list 212b.
FIG. 8 is a diagram illustrating an example of spot information.
FIG. 9 is a flowchart depicting an example of processing for creating an action plan.
FIG. 10 is a flowchart depicting an example of processing for adding an action plan for free time.
FIG. 11 is a diagram illustrating a specific example of a schedule after an action plan is added.
FIG. 12 is a diagram illustrating a specific example of a schedule after an action plan is added.
FIG. 13 is a flowchart depicting an example of processing for changing an action plan.
FIG. 14 is a diagram illustrating a specific example of a schedule before an action plan is changed.
FIG. 15 is a diagram illustrating a specific example of a schedule after an action plan is added.
FIG. 16 is a diagram illustrating a specific example of a schedule after an action plan is added.
FIG. 17 is a diagram illustrating a specific example of a schedule after an action plan is added.
FIG. 18 is a diagram illustrating a specific example of a schedule after an action plan is added.
FIG. 19 is a diagram illustrating a specific example of a schedule after an action plan is added.
FIG. 20 is a diagram illustrating a specific example of a schedule after an action plan is added.
FIG. 21 is a block diagram illustrating an example of the hardware configuration of an information processing apparatus 900 embodying an information processing terminal 10 and an information processing server 20.

### Description of Embodiments

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

The description will be given in the following order.
1. Embodiment
1.1. Outline
1.2. Example of System Configuration
1.3. Example of Functional Configuration of Information Processing Terminal 10
1.4. Example of Functional Configuration of Information Processing Server 20
1.5. Flow of Processing
2. Example of Hardware Configuration
3. Summary

### <1. Embodiment>

### <<1.1. Outline>>

First, the present disclosure is outlined.

As described above, an action plan for a plurality of users to act together has been created in consideration of information regarding a schedule, attributes, preference, or the like of each user, traffic information, spot information, environmental information, and so on. In addition, when a plan is carried out, changing the action plan is sometimes required due to the occurrence of an unexpected situation or the like.

Further, in recent years, technologies for supporting or automating creation of action plans have been developed, such as the technology disclosed in Patent Literature 1; however, according to these technologies, it is impossible to create an action plan suitable for a plurality of users on the basis of a relationship among the plurality of users.

The technical idea according to the present disclosure is conceived focusing on the above points, and the present disclosure enables creation of an action plan more suitable for a plurality of users on the basis of a relationship among the plurality of users. The use of the present disclosure makes it possible to create a more proper action plan on the basis of the relationship among the users, for example, even in a case where identifying a user is difficult, or even in a case where preference information or the like of the user is unknown even if the user is identified. In addition, in a case where, when a plan is carried out, changing the action plan is sometimes required due to the occurrence of an unexpected situation or the like, the present disclosure makes it possible to change (or re-create) the action plan more appropriately.

Note that the action plan according to the present disclosure includes a plan for a plurality of users to act together.
In addition, the action plan according to the present disclosure may be a plan of action carried out when going out and may be a plan of action carried out when not going out (for example, an action at home).

### <<1.2. Example of System Configuration>>

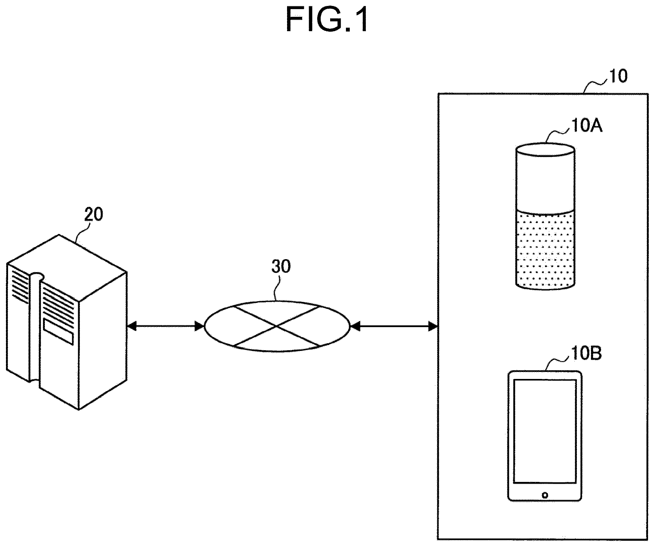

The present disclosure is outlined above. Subsequently, an example of the configuration of an information processing system according to the present embodiment is described with reference to FIG. 1.

As illustrated in FIG. 1, the information processing system according to the present embodiment includes the information processing terminal 10 and the information processing server 20. The information processing terminal 10 and the information processing server 20 are connected to each other via a network 30.

### (Information Processing Terminal 10)

The information processing terminal 10 according to the present embodiment is an agent device that performs spoken dialogue with a user (note that the agent device is a kind of information processing apparatus). The information processing terminal 10 has a function to collect various types of information used at creation or change of an action plan. More specifically, the information processing terminal 10 is provided with a sound input mechanism and a sound output mechanism, and is capable of understanding the contents of utterance by analyzing a sound from the user and of uttering so as to correspond to the contents of utterance.

In addition, the information processing terminal 10 includes various sensors in the subject device, which allows the information processing terminal 10 to acquire sensing data from the sensors. Further, the information processing terminal 10 can acquire sensing data also from an external device. Note that the sensing data acquired by the information processing terminal 10 is not particularly limited. For example, the sensing data acquired by the information processing terminal 10 includes data outputted by any sensor such as an acceleration sensor, a gyro sensor, an image sensor (for example, a charge-coupled device (CCD) sensor, a complementary metal oxide semiconductor (CMOS) sensor, or the like), a geomagnetic sensor, a barometric sensor, a temperature sensor, a vibration sensor, a sound sensor, a heart rate sensor, a pulse wave sensor, a proximity sensor, an illuminance sensor, a pressure sensor, a position sensor (for example, a global navigation satellite system (GNSS) sensor, etc.), a sweat sensor, a pH sensor, a humidity sensor, an infrared sensor, or the like.

The information processing terminal 10 uses the above-mentioned sound input mechanism or various sensors and the like to collect various types of information used at creation or change of an action plan (for example, information regarding a schedule, attributes, preference, or the like of each user, traffic information, spot information, environmental information, information regarding the occurrence of an unexpected situation, or the like). The information processing terminal 10 then provides the information processing server 20 with the collected various types of information. At this time, the information processing terminal 10 may appropriately process or edit the collected various types of information. For example, the information processing terminal 10 may remove noise by performing filtering processing on the collected sensing data, or may analyze the collected various types of information to provide the information processing server 20 with the analysis result only.

Further, the information processing terminal 10 has a function to receive information regarding the action plan that has been created, changed, or the like by the information processing server 20 and to provide the information to the user. The method for providing the information to the user is not particularly limited. For example, the information processing terminal 10 can provide the information to the user by outputting sound information regarding the action plan, by displaying the information regarding the action plan on a display, by projecting the information regarding the action plan on a wall surface, or the like.

Note that the type of the information processing terminal 10 is not particularly limited. The information processing terminal 10 may be, for example, a mobile phone, a smartphone, a tablet, a wearable device, a general-purpose computer, a dedicated device of a stationary type, an autonomous mobile type, or the like. In the present embodiment, as illustrated in FIG. 1, a case is described, taking an example in which an information processing terminal 10A that is a dedicated device of a stationary type and an information processing terminal 10B that is a smartphone are used as the information processing terminal 10. The information processing terminal 10A and the information processing terminal 10B can implement similar functions. Note that, in a case where it is unnecessary to distinguish the information processing terminal 10A and the information processing terminal 10B from each other, the simple term "information processing terminal 10" is used.

### (Information Processing Server 20)

The information processing server 20 according to the present embodiment is an information processing apparatus that creates and changes an action plan and so on. More specifically, the information processing server 20 estimates a relationship among a plurality of users on the basis of various types of information such as the sensing data provided by the information processing terminal 10, and creates an action plan for the plurality of users on the basis of the estimation result.

The relationship among a plurality of users is not particularly limited as long as it is information indicating some sort of connection of the plurality of users. For example, the relationship among a plurality of users includes a family relationship, a marital relationship, a parent-child relationship, a relative, a couple relationship, a friendship, a business relationship, a mentor-mentee relationship, a teacher-student relationship, a manager or coach-player relationship, and a relationship between a service provider and a service recipient. The information processing server 20 provides the information processing terminal 10 with information regarding an action plan that has been created, changed, or the like. The processing is detailed later.

Note that the type of the information processing server 20 is not particularly limited. The information processing server 20 may be, for example, a device of a type similar to that of the information processing terminal 10 described above.

### (Network 30)

The network 30 may include a public network such as the Internet, a telephone network, or a satellite communication network, various local area networks (LANs) including Ethernet (registered trademark), and a wide area network (WAN). Further, the network 30 may include a leased line network such as an internt protocol-virtual private network (IP-VPN). Further, the network 30 may also include a wireless communication network such as Wi-Fi (registered trademark) and Bluetooth (registered trademark).

The configuration example of the information processing system according to the present embodiment is described above. Note that the configuration described above with reference to FIG. 1 is merely an example, and the configuration is not limited to the configuration example of the information processing system according to the present embodiment. The functions of the information processing terminal 10 and the information processing server 20 may be implemented, for example, by a single device. The configuration of the information processing system according to the present embodiment can be flexibly modified according to the specifications and operations.

### <<1.3. Example of Functional Configuration of Information Processing Terminal 10>>

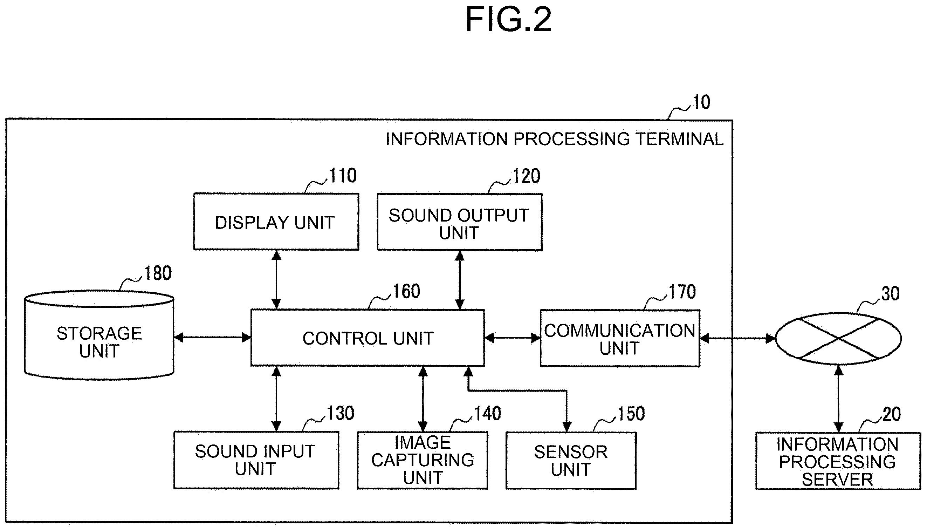

The example of the configuration of the information processing system according to the present embodiment is described above. Subsequently, an example of the functional configuration of the information processing terminal 10 is described with reference to FIG. 2.

As illustrated in FIG. 2, the information processing terminal 10 includes a display unit 110, a sound output unit 120, a sound input unit 130, an image capturing unit 140, a sensor unit 150, a control unit 160, a communication unit 170, and a storage unit 180.

### (Display Unit 110)

The display unit 110 is a functional configuration that outputs visual information such as an image and text. The display unit 110 can output visual information regarding an action plan of a user on the basis of control by the control unit 160, for example.

To that end, the display unit 110 is provided with a display device or the like that presents the visual information. Examples of the display device include a liquid crystal display (LCD) device, an organic light emitting diode (OLED) device, and a touch screen. In addition, the display unit 110 may use a projection function to output the visual information.

### (Sound Output Unit 120)

The sound output unit 120 is a functional configuration that outputs various sounds including speech utterance. For example, the sound output unit 120 can perform speech utterance and the like regarding the action plan of the user on the basis of control by the control unit 160. For this purpose, the sound output unit 120 is provided with a sound output device such as a speaker or an amplifier.

### (Sound Input Unit 130)

The sound input unit 130 is a functional configuration that collects sound information such as utterance by the user and an ambient sound generated around the information processing terminal 10. The sound information collected by the sound input unit 130 is used for speech recognition and recognition of the surrounding environment, or creation or change of the action plan of the user by the control unit 160 or the information processing server 20, and the like. The sound input unit 130 is provided with a microphone for collecting sound information.

### (Image Capturing Unit 140)

The image capturing unit 140 is a functional configuration that captures an image of the user or an image of the surrounding environment. The image captured by the image capturing unit 140 is used for identification of the user, recognition of the surrounding environment by the control unit 160 or the information processing server 20, and the like. The image capturing unit 140 is provided with an imaging device capable of capturing an image. Note that the above image includes moving images as well as still images.

### (Sensor Unit 150)

The sensor unit 150 is a functional configuration that collects various sensing data regarding the surrounding environment, an action of the user, and a state. The sensing data collected by the sensor unit 150 is used for identification of the user, recognition of the surrounding environment, recognition of the occurrence of an unexpected situation by the control unit 160 or the information processing server 20, and the like. An example of the sensor provided in the sensor unit 150 is as described above.

### (Control Unit 160)

The control unit 160 is a functional configuration that controls each configuration of the information processing terminal 10. The control unit 160 controls, for example, start and stop of each configuration. Further, the control unit 160 can control the output from the display unit 110 or the sound output unit 120 by using a control signal generated by the control unit 160.

In addition, the control unit 160 appropriately processes or analyzes various types of information such as sound information inputted by the sound input unit 130, an image captured by the image capturing unit 140, and sensing data collected by the sensor unit 150 or an external device, so that speech recognition, user identification, recognition of the surrounding environment, or the like can be implemented.

The control unit 160 also provides the information processing server 20, via the communication unit 170, with the various types of information collected by the information processing terminal 10 and the various types of information processed, analyzed, or the like by the control unit 160. Further, the control unit 160 controls processing for outputting the information regarding the action plan of the user, provided from the information processing server 20, by using the display unit 110 or the sound output unit 120.

### (Communication Unit 170)

The communication unit 170 is a functional configuration that performs information communication with the information processing server 20 via the network 30. More specifically, the communication unit 170 functions as a transmission unit that transmits, to the information processing server 20, various types of information such as the sensing data collected, processed, analyzed, or the like by the information processing terminal 10. Further, the communication unit 170 also functions as a reception unit that receives information regarding the action plan of the user created or changed by the information processing server 20. Note that the information that the communication unit 170 communicates is not limited thereto.

### (Storage Unit 180)

The storage unit 180 is a functional configuration that stores various types of information. For example, the storage unit 180 stores various types of information collected, processed, analyzed, or the like by the information processing terminal 10, information regarding the action plan of the user provided by the information processing server 20, and the like. The storage unit 180 also stores, therein, programs, parameters, or the like used by each functional configuration of the information processing terminal 10. Note that the information that the storage unit 180 stores is not limited thereto.

The functional configuration example of the information processing terminal 10 is described above. Note that the functional configuration described above using FIG. 2 is merely an example, and the functional configuration of the information processing terminal 10 is not limited to the example. For example, the information processing terminal 10 does not necessarily include each configuration illustrated in FIG. 2. For example, the information processing terminal 10 can be configured not to include the display unit 110, the image capturing unit 140, the sensor unit 150, or the like. Further, the functional configuration of the information processing terminal 10 can be flexibly modified according to the specifications and operations.

### <<1.4. Example of Functional Configuration of Information Processing Server 20>>

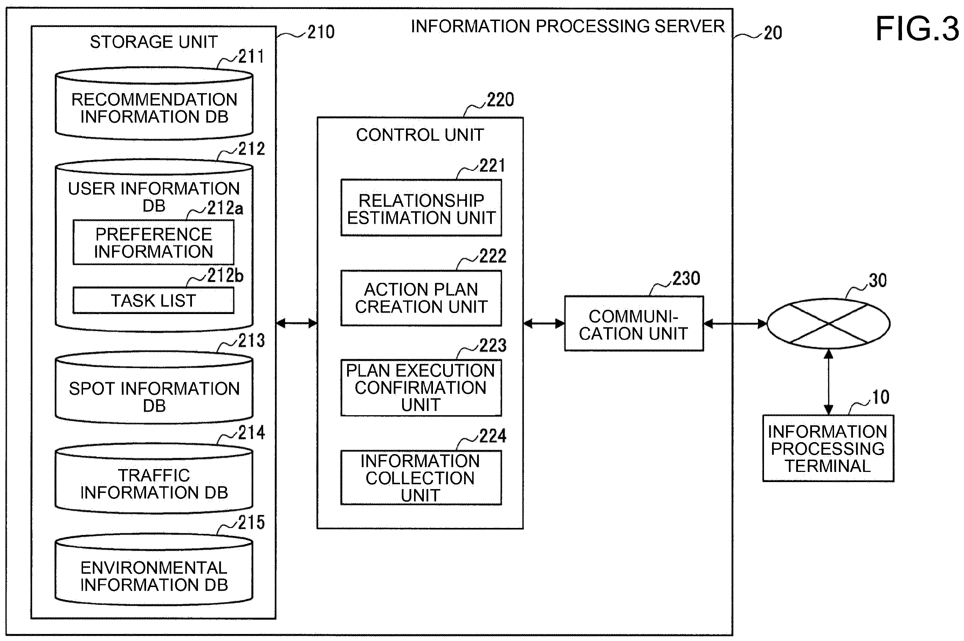

The example of the functional configuration of the information processing terminal 10 is described above. Subsequently, an example of the functional configuration of the information processing server 20 is described with reference to FIG. 3.

As illustrated in FIG. 3, the information processing server 20 includes a storage unit 210, a control unit 220, and a communication unit 230. Further, the storage unit 210 includes a recommendation information DB 211, a user information DB 212, a spot information DB 213, a traffic information DB 214, and an environmental information DB 215, and the user information DB 212 includes preference information 212a and a task list 212b. Further, the control unit 220 includes a relationship estimation unit 221, an action plan creation unit 222, a plan execution confirmation unit 223, and an information collection unit 224.

### (Storage Unit 210)

The storage unit 210 is a functional configuration that stores various types of information. For example, the storage unit 210 stores various types of information collected, processed, analyzed, or the like by the information processing terminal 10, information regarding the action plan of the user provided by the information processing server 20, and the like. The storage unit 210 also stores, therein, programs, parameters, or the like used by each functional configuration of the information processing server 20. Note that the information that the storage unit 210 stores is not limited thereto.

### (Recommendation Information DB 211)

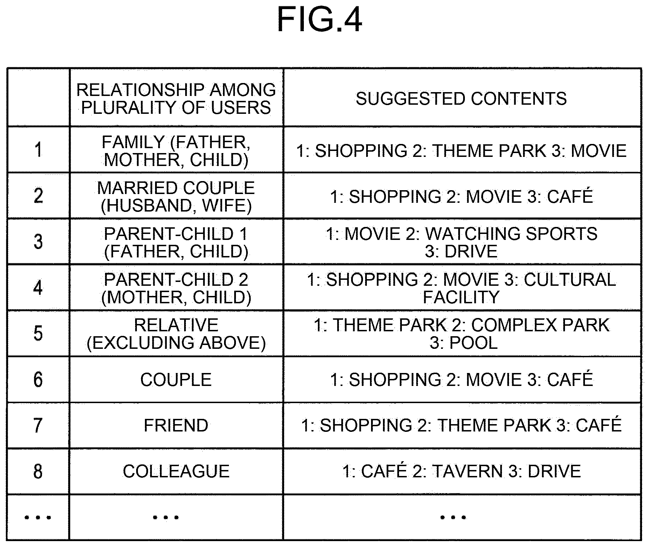

The recommendation information DB 211 is a functional configuration that stores information used for creation or change of the action plan of the user. More specifically, as illustrated in FIG. 4, the recommendation information DB 211 stores information in which a relationship among a plurality of users is correlated to contents to be recommended (for example, an action, a thing, genre, or the like to be recommended), the information being hereinafter sometimes referred to as "recommendation information". For example, the relationship among users "family (father, mother, child)" is correlated, as the contents to be recommended, to "1: shopping 2: theme park (i.e., playing in a theme park) 3: movie (i.e., seeing a movie). Here, the numbers 1 to 3 in the contents to be recommended indicate the priority of recommendation, "1" represents the content given the highest priority, "2" represents the content given the second highest priority, and "3" represents the content given the third highest priority. Note that, in FIG. 4, the content correlated to the relationship among a plurality of users is an action to be recommended; however, this is merely an example, and the content correlated to the relationship among a plurality of users is not particularly limited. For example, the content correlated to the relationship among a plurality of users may be a thing to be recommended (for example, a product, service, or the like), genre to be recommended (for example, genre of a movie, music, a game, or the like), time to be recommended (for example, time at which to act, etc.), a place to be recommended (for example, a place in which to act, etc.). Further, the recommendation information DB 211 may store information in which a relationship among a plurality of users is correlated to contents not to be recommended.

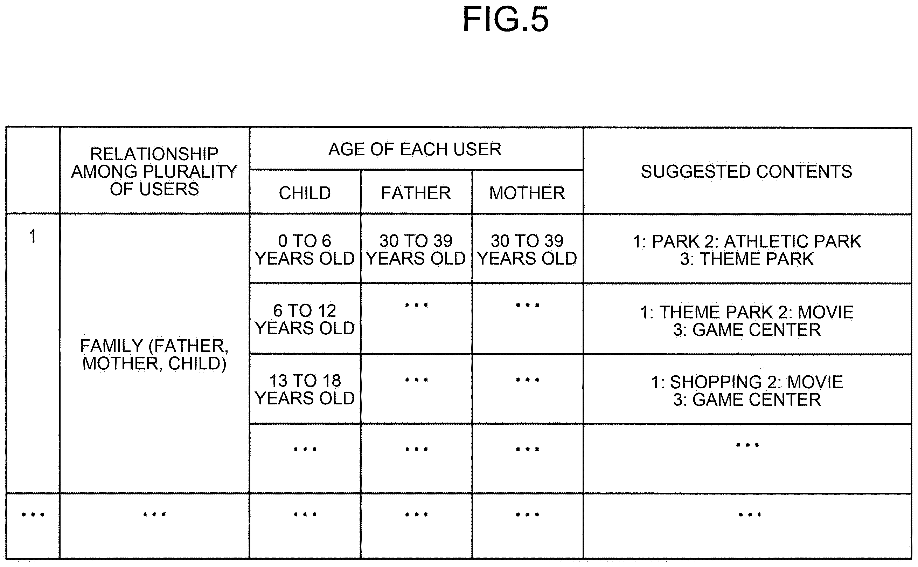

Further, the recommendation information DB 211 may store information in which a relationship among a plurality of users is further subdivided. For example, as illustrated in FIG. 5, the recommendation information DB 211 may subdivide the information of FIG. 4 by age of each user. More specifically, the recommendation information DB 211 may store all possible combinations of age of each user in each relationship so as to correlate to contents to be recommended. Note that, although the information of FIG. 5 is subdivided by age group divided in accordance with a predetermined age range such as "0 to 6 years old", the method of subdivision is not limited thereto (for example, the subdivision may be made on a one-year-old basis or on a few-months basis).

Also, the relationship may be subdivided on the basis of information other than the age of each user. For example, the relationship may be subdivided on the basis of information regarding a residential area or a hometown area (for example, an address, latitude and longitude, etc.) of the user, preference information (for example, hobbies, favorite things, disliked things, or the like) of the user, information regarding assets (for example, an amount of savings, income, expenditure, or the like) of the user, information regarding an educational background or a work history (for example, a school name, a company name, years of service, a duty, or the like) of the user, information regarding properties (for example, the presence or absence of a vehicle, a real estate, a pet, or the like) of the user, information regarding surrounding environment (for example, details of a surrounding facility, a distance to a surrounding facility, or the like) of the user, or the number of users (for example, the number of members of a family or group, etc.).

### (User Information DB 212)

The user information DB 212 is a functional configuration that stores, therein, various types of information regarding the user. For example, the user information DB 212 stores, therein, information regarding physical traits of the user (for example, height, weight, body fat, blood pressure, a face image, voice characteristics, or the like) of the user, attributes (for example, a name, a relationship, a gender, an age, a date of birth, an educational background, a work history, an address, or the like) of the user, an action history, etc. (for example, contents of an action, frequency of an action, a place at which to act, etc.) of the user.

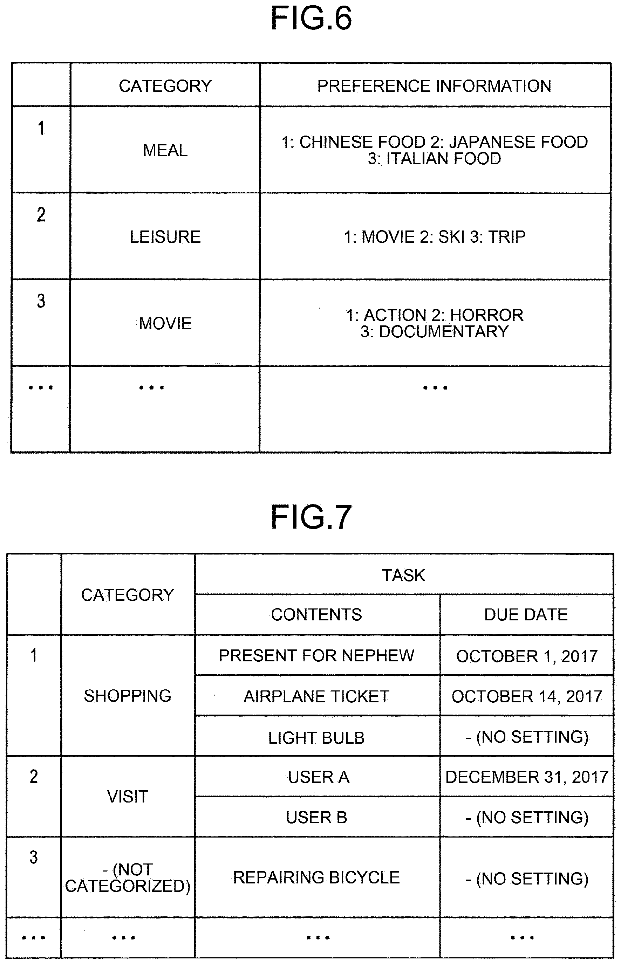

Further, in the present embodiment, the user information DB 212 stores the preference information 212a and the task list 212b of each user as described above. Here, with reference to FIG. 6, an example of the preference information 212a is described. As illustrated in FIG. 6, the preference information 212a includes information regarding a plurality of categories (for example, a meal, leisure, a movie, or the like). In the example of FIG. 6, as information regarding the category "meal", "1: Chinese food 2: Japanese food 3: Italian food" is stored. Note that the numbers 1 to 3 of the preference information 212a indicate a degree of preference, namely, "1" representing the most preferred content, "2" representing the second most preferred content, and "3" representing the third most preferred content. The preference information 212a as that illustrated in FIG. 6 is provided for each user. Note that the information included in the preference information 212a is not limited to the above. Further, the user information DB 212 may store contents that the user does not like.

Subsequently, an example of the task list 212b is described with reference to FIG. 7. As illustrated in FIG. 7, the task list 212b includes information regarding contents and deadline of a task corresponding to a plurality of categories (for example, shopping, visit, or the like). In the example of FIG. 7, "present for nephew", "airplane ticket", and "light bulb" are stored as the contents of a task corresponding to the category "shopping", and the deadline is stored for each content. The task list 212b as that illustrated in FIG. 7 is provided for each user. The information included in the task list 212b is not limited to the above. For example, the priority of each task may be added to the task list 212b.

The information that the user information DB212 stores is described above. The information that the user information DB212 stores is not limited to the above. The above-described information that the user information DB212 stores is used, for example, for creation or change of the action plan.

### (Spot Information DB 213)

The spot information DB 213 stores, therein, spot information including metadata about spots where the user goes, the metadata collected by the information collection unit 224 (so-called web crawling has been performed) from various sites on the network (for example, official sites of various facilities, various types of information summary sites which assemble related sites, outing information sites, or the like).

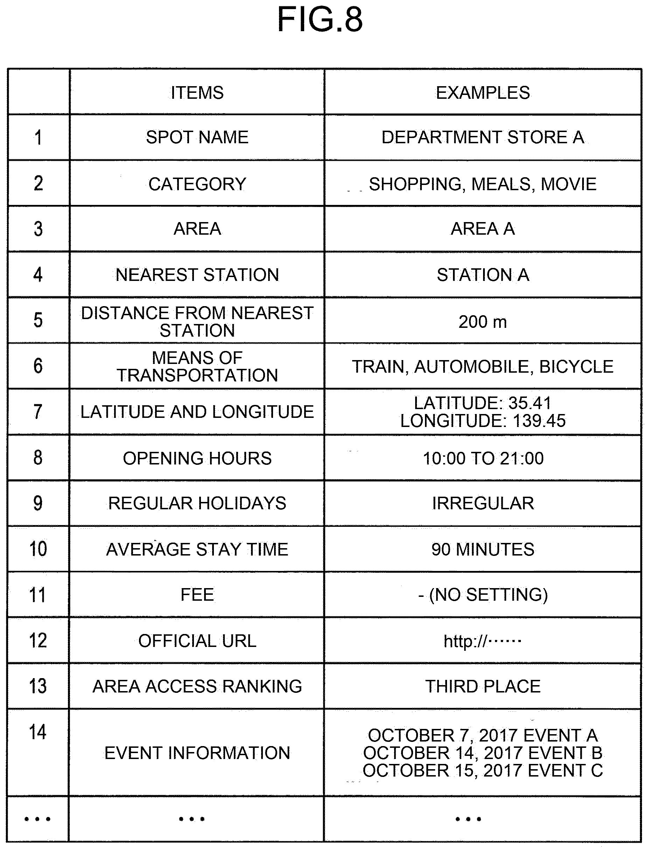

Here, an example of the spot information is described with reference to FIG. 8. As illustrated in FIG. 8, the spot information includes a spot name, a category, an area, a nearest station, a distance from the nearest station, a means of transportation, latitude and longitude, opening hours, regular holidays, an average stay time, a fee, an official uniform resource locator (URL), an area access ranking, and event information. Note that the information included in the spot information is not limited thereto. For example, the spot information may include word-of-mouth information provided by users (for example, an evaluation score, an experience, or the like). The above-described information stored in the spot information DB 213 is used, for example, for creation or change of the action plan.

### (Traffic Information DB 214)

The traffic information DB 214 stores, therein, traffic information including metadata about transportation used when going out, the metadata collected by the information collection unit 224 (so-called web crawling has been performed) from various sites on the network (for example, an official site of each transportation, a traffic information site, a route search site, or the like). The traffic information includes information regarding operation time or a delay of each transportation (for example, a train, a bus, an airplane, a taxi, a ferry, or the like) and traffic congestion information regarding roads (for example, a general road, a highway, or the like). Note that the information included in the traffic information is not limited thereto. For example, the traffic information may include information regarding an accident (for example, an accident location, an effect or damage of the accident, or the like). The above-described information stored in the traffic information DB 214 is used, for example, for creation or change of the action plan.

### (Environmental Information DB 215)

The environmental information DB 215 stores, therein, environmental information including metadata about environment of a place where the user goes, the metadata collected by the information collection unit 224 (so-called web crawling has been performed) from various sites (for example, a weather information site, a disaster information site, or the like) on the network. The environmental information includes weather information (for example, information regarding weather, temperature, wind velocity, hours of sunlight, or the like) and disaster information (for example, information regarding an earthquake, tsunami, heavy rain, flood, fire, or the like). Note that the information included in the environmental information is not limited thereto. For example, the environmental information may include information as to how to cope with a disaster (for example, information regarding an evacuation site, a place for relief supplies, or the like). The above-described information that the environmental information DB 215 stores is used, for example, for creation or change of the action plan.

### (Control Unit 220)

The control unit 220 is a functional configuration that totally controls all the processing performed by the information processing server 20. For example, the control unit 220 can control start and stop of each configuration, generate a control signal to control an output unit (not illustrated) such as a display or a speaker, and so on.

Further, the control unit 220 can implement, on behalf of the user, various processing which is necessary in connection with the creation or change of the action plan. For example, in a case where it is necessary to reserve or cancel a facility, a vehicle, or the like in connection with the creation or change of the action plan, the control unit 220 can perform various processing such as reservation or cancellation on an external device that manages the facility or the transportation. Note that the control content by the control unit 220 is not limited thereto. For example, the control unit 220 may control processing generally performed in a general-purpose computer, a PC, a tablet PC, and the like.

### (Relationship Estimation Unit 221)

The relationship estimation unit 221 is a functional configuration that estimates a relationship among a plurality of users on the basis of sensing data. For example, the relationship estimation unit 221 may estimate the relationship among users by analyzing sound information. More specifically, the relationship estimation unit 221 recognizes the content of conversation by analyzing sound information regarding the conversation among the plurality of users acquired by the sound input unit 130 of the information processing terminal 10. Then, in a case where the content of conversation is a private content related to a family, the relationship estimation unit 221 may estimate that the relationship among the plurality of users is "family (father, mother, child)", "married couple (husband, wife)", "parent-child 1 (father, child)", "parent-child 2 (mother, child)", "relative (excluding the above)", or the like of FIG. 4. In a case where the content of conversation is a specialized content related to work, the relationship estimation unit 221 may estimate that the relationship among the plurality of users is "colleague" or the like. Further, the relationship estimation unit 221 may estimate the relationship among users on the basis of wording (for example, presence or absence of an honorific language, a humble language, a polite language, or the like).

Further, the relationship estimation unit 221 may estimate a relationship among users by analyzing an image captured. More specifically, the relationship estimation unit 221 may estimate the relationship among the users by analyzing an image in which the plurality of users is photographed captured by the image capturing unit 140 of the information processing terminal 10. For example, in a case where users with similar ages hold hands, the relationship estimation unit 221 may estimate that the relationship between the plurality of users is "married couple (husband, wife)", "couple", or the like. Further, in a case where a user pushes a stroller carrying a child, the relationship estimation unit 221 may estimate that the relationship between the plurality of users is "parent-child 1 (father, child)", "parent-child 2 (mother, child), or the like.

Further, the relationship estimation unit 221 may estimate a relationship among users by analyzing position information. More specifically, the relationship estimation unit 221 recognizes the positions of a plurality of users by analyzing the position information acquired by the sensor unit 150 of the information processing terminal 10. Then, in a case where a plurality of users is in a company, the relationship estimation unit 221 may estimate that the relationship among the plurality of users is "colleague" or the like.

Note that the method for estimating a relationship among a plurality of users is not limited to the above. For example, a plurality of sensing data analysis results as described above may be combined to estimate a relationship among users. Also, sensing data collected by an external device other than the information processing terminal 10 may be used. Further, in a case where each user is identified, attribute information of each user (for example, information regarding a name, a relationship, a gender, an age, a date of birth, an educational background, a work history, an address, or the like) may be used to estimate the relationship. For example, in a case where ages and schools of a plurality of users are the same, the relationship estimation unit 221 may estimate that the relationship among the plurality of users is a "friend" or the like. It is of course possible that the relationship among users is inputted by a user in advance. Also, the relationship among a plurality of users may be more than one relationship. For example, in a case where there are two users who are a married couple and colleagues, the relationship estimation unit 221 may estimate that the relationship between the two users is both "married couple (husband, wife)" and "colleague".

### (Action Plan Creation Unit 222)

The action plan creation unit 222 is a functional configuration that creates and changes an action plan of a plurality of users on the basis of the result of estimation of a relationship among a plurality of users. If a plurality of users has a confirmed action plan, then the action plan creation unit 222 makes various recommendations in order to determine the details of the confirmed action plan on the basis of the result of estimation of the relationship among the users. For example, in a case where a plurality of users has a confirmed action plan of "seeing a movie together", the action plan creation unit 222 recommends, in order to determine the details of the confirmed action plan, a movie title, a movie theater location, movie show time, a seat, or the like on the basis of the result of estimation of the relationship among the users.

At this time, the action plan creation unit 222 uses the recommendation information stored in the recommendation information DB 211 to make a recommendation. For example, the action plan creation unit 222 may determine genre of a movie to be recommended using the recommendation information in the recommendation information DB 211 in which the relationship among the users and the genre of a movie to be recommended are correlated to each other, and may recommend a movie included in the genre. The action plan creation unit 222 may also make a recommendation using various types of information such as the user information, the spot information, the traffic information, and the environmental information described above. For example, the action plan creation unit 222 may identify at least one of a plurality of users on the basis of various types of information such as the sensing data to recommend a movie theater frequently used by the user or a movie included in genre that the user likes on the basis of the user information of the identified user (for example, an action history, preference information, or the like). Further, the action plan creation unit 222 may confirm, on the basis of the spot information, the business hours of a movie theater to be recommended, the title of a movie showing, the show schedule, an available seat, a fee, and the like. In addition, the action plan creation unit 222 may determine a means of transportation to the movie theater to be recommended on the basis of the traffic information. In addition, on the basis of the weather information included in the environmental information, the action plan creation unit 222 may change the means of transportation (for example, recommend to move by train instead of walking on a rainy day, etc.), recommend a carrying item (for example, recommend to carry a parasol on a sunny day, etc.), and so on. The action plan creation unit 222 adds, to a schedule, the confirmed action plan of which details have been determined.

Further, the action plan creation unit 222 recommends an action for free time (time other than the time at which the confirmed action plan is added in the schedule) on the basis of the estimation result of the relationship among a plurality of users. For example, the action plan creation unit 222 checks whether or not there is continuous free time of predetermined time (for example, approximately several tens of minutes or several hours) or longer in the schedule. Then, in a case where there is continuous free time equal to or longer than the predetermined time, the action plan creation unit 222 recommends an action for free time.

The method for recommending an action for free time is not particularly limited. For example, the action plan creation unit 222 may make a recommendation on the basis of a lifestyle. For example, in a case where a period of time during which the user usually has a meal is free time, the action plan creation unit 222 may recommend the user to have a meal at an optimal restaurant on the basis of the estimation result of the relationship among a plurality of users. In addition, the action plan creation unit 222 may make a recommendation on the basis of the task list 212b. For example, in a case where there is a task that can be performed in the task list 212b, the action plan creation unit 222 may recommend the task. Further, the action plan creation unit 222 may make a recommendation on the basis of an area where the user is present in a period of time before and after free time. For example, the action plan creation unit 222 may recommend a popular spot or the like near an area where the user is present in the period of time before and after free time. Note that, with respect to the processing for recommending an action for free time, the action plan creation unit 222 may use various types of information such as the recommendation information, the user information, the spot information, the traffic information, the environmental information, or the like described above. The action plan creation unit 222 adds, to a schedule, the action plan for free time of which details have been determined.

As described above, at the time of creating an action plan, the action plan creation unit 222 determines, to the details, the confirmed action plan and the action plan for free time, and fills the schedule. On the other hand, at the time of changing the action plan, after the plan execution confirmation unit 223, described later, shares information to the effect that the action plan needs to be changed, the action plan creation unit 222 changes the action plan for a period of time for which the plan change is needed. At this time, the action plan creation unit 222 recognizes circumstances surrounding the user and why making a change is necessary, and the like, and recommends a new action. More specifically, the action plan creation unit 222 analyzes the sensing data, the user information, the spot information, the traffic information, the environmental information, or the like provided by the information processing terminal 10 to recognize circumstances surrounding the user and why making a change is necessary, and the like, and recommends a new action on the basis of the pieces of information. The method for recommending a new action can be similar to the method for recommending at the time of creation of the action plan.

### (Plan Execution Confirmation Unit 223)

The plan execution confirmation unit 223 is a functional configuration that confirms whether or not the created action plan is carried out, or can be carried out. More specifically, the plan execution confirmation unit 223 analyzes the sensing data collected by the information processing terminal 10 or the external device to check whether or not the action plan is being carried out appropriately or whether or not the action plan can be carried out. For example, the plan execution confirmation unit 223 recognizes the position of each user by analyzing the position information collected by the position sensor (for example, a GNSS sensor, etc.) of the information processing terminal 10 carried by each user. The plan execution confirmation unit 223 then checks whether or not the user is at a planned location.

Note that the type of the sensing data used for the processing is not particularly limited. For example, the plan execution confirmation unit 223 may check whether or not the action plan is carried out appropriately or whether or not the action plan can be carried out by estimating the action of each user with sensing data of the acceleration sensor, the gyro sensor, or the like of the information processing terminal 10 carried by the user. Note that analyzing the sensing data may be performed by the control unit 160 of the information processing terminal 10. Further, the processing may be performed on the basis of information other than the sensing data. For example, the plan execution confirmation unit 223 may check whether or not the content of the action plan is carried out appropriately or whether or not the action plan can be carried out on the basis of the user information, the spot information, the traffic information, or the environmental information described above.

The plan execution confirmation unit 223 determines the necessity of the change to the action plan. For example, the plan execution confirmation unit 223 may determine the necessity of the change to the action plan on the basis of whether or not a difference between the actual position of the user and a position on the action plan is larger than a predetermined value. Further, the plan execution confirmation unit 223 may determine the necessity of the change to the action plan on the basis of whether or not a difference between the time when the user has acted and time of the action plan is larger than a predetermined value. Note that the method for determining the necessity of the change to the action plan is not limited to the above.

In a case where determining that the action plan needs to be changed, the plan execution confirmation unit 223 informs the action plan creation unit 222 of the fact and the action plan creation unit 222 changes the action plan.

### (Information Collection Unit 224)

The information collection unit 224 is a functional configuration that collects various types of information stored in the storage unit 210. For example, the information collection unit 224 collects various types of information such as sensing data collected, processed, analyzed, or the like by the information processing terminal 10, and stores the collected information in the storage unit 210. In addition, the information collection unit 224 collects user information (for example, an action history, etc.) from the information processing terminal 10 and causes the user information DB 212 to store the user information. Further, the information collection unit 224 collects spot information, traffic information, and environmental information from various sites on the network through web crawling, and stores the spot information, the traffic information, and the environmental information in the spot information DB 213, the traffic information DB 214, and the environmental information DB 215, respectively. The information collected by the information collection unit 224 is not limited to the information described above. Further, time at which the information collection unit 224 collects information and so on is not particularly limited.

### (Communication Unit 230)

The communication unit 230 is a functional configuration that performs information communication with the information processing terminal 10 via the network 30. More specifically, the communication unit 230 receives, from the information processing terminal 10, various types of information such as sensing data collected, processed, analyzed, or the like by the information processing terminal 10. In addition, the communication unit 230 transmits, to the information processing terminal 10, information regarding the action plan that has been created, changed, or the like. Note that the information that the communication unit 230 communicates is not limited thereto.

The functional configuration example of the information processing server 20 is described above. Note that the functional configuration described above using FIG. 3 is merely an example, and the functional configuration of the information processing server 20 is not limited to the example. For example, the information processing server 20 can be configured not to include each of the configurations illustrated in FIG. 3. In addition, the functional configuration of the information processing server 20 can be flexibly modified according to the specifications and operations.

### <<1.5. Flow of Processing>>

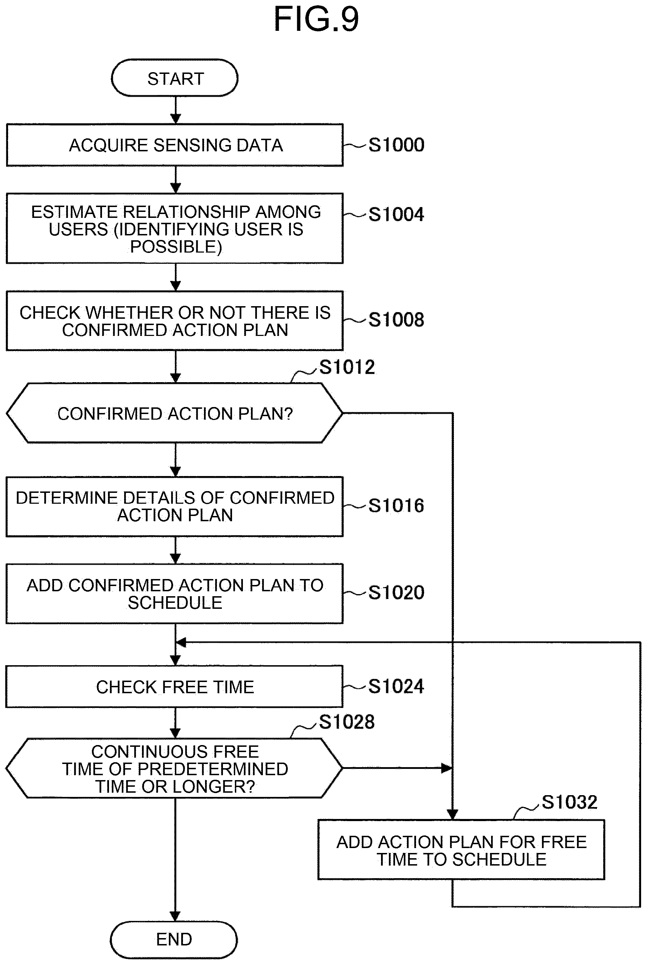

The example of the functional configuration of the information processing server 20 is described above. Subsequently, the flow of processing according to the present embodiment is described with reference to FIG. 9.

### (Processing for Creating Action Plan)

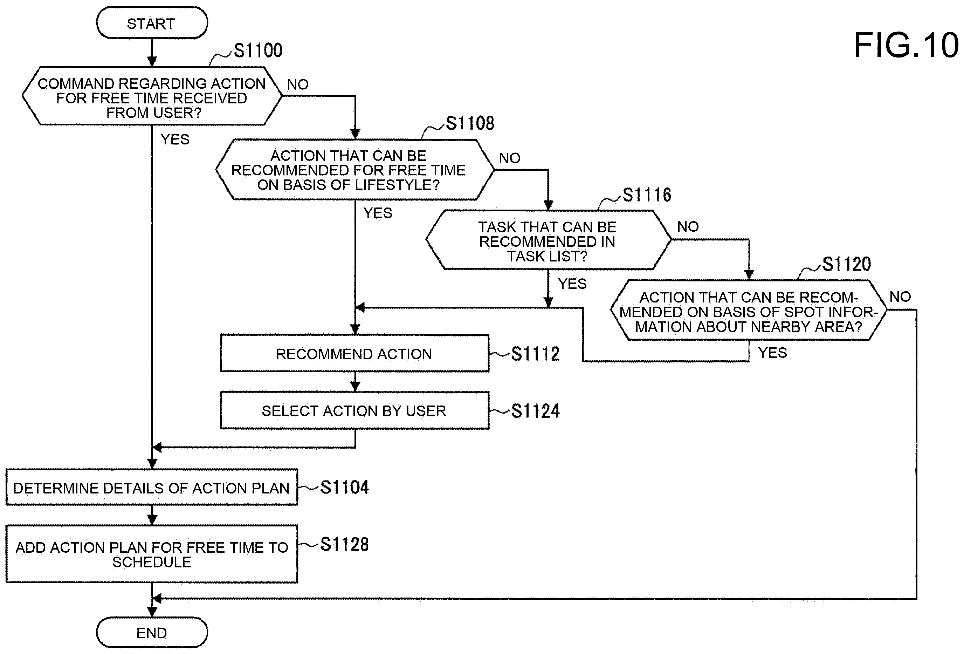

First, the processing for creating an action plan is described with reference to FIGS. 9 and 10. In Step S1000 of FIG. 9, the relationship estimation unit 221 of the information processing server 20 acquires sensing data collected by the information processing terminal 10 and the like. In Step S1004, the relationship estimation unit 221 estimates a relationship among a plurality of users on the basis of the sensing data thus acquired. At this time, the action plan creation unit 222 may identify at least one of the plurality of users on the basis of the sensing data.

In Step S1008, the action plan creation unit 222 checks whether or not there is a confirmed action plan. For example, in a case where the information processing terminal 10 has checked whether or not there is a confirmed action plan in advance through spoken dialogue between the information processing terminal 10 and the user, the action plan creation unit 222 obtains the information from the information processing terminal 10. Further, in a case where the information processing terminal 10 has not checked whether or not there is a confirmed action plan in advance through spoken dialogue between the information processing terminal 10 and the user, the action plan creation unit 222 may request the information processing terminal 10 to check whether or not there is a confirmed action plan.

In a case where there is a confirmed action plan (Step S1012/Yes), the action plan creation unit 222 determines the details of the confirmed action plan in Step S1016. For example, the action plan creation unit 222 determines the details of the confirmed action plan by performing various recommendations using various types of information such as the recommendation information, the user information, the spot information, the traffic information, the environmental information, or the like. Note that, in a case where the action plan creation unit 222 has identified at least one of the plurality of users in Step S1004, various recommendations may be made using the preference information, the action history, etc., of the identified user. In Step S1020, the action plan creation unit 222 adds the confirmed action plan to the schedule.

In Step S1024, the action plan creation unit 222 checks free time in the schedule. More specifically, the action plan creation unit 222 checks whether or not there is continuous free time of predetermined time or longer in the schedule. In a case where there is continuous free time of predetermined time or longer in the schedule (Step S1028/Yes), the action plan creation unit 222 adds an action plan for free time to the schedule in Step S1032. Thereafter, the processing proceeds to Step S1024, and the processing for adding an action plan for free time is performed until there is no more continuous free time of predetermined time or longer. The flow of the processing for adding an action plan for free time is described with reference to FIG. 10.

Note that, in a case where there is no confirmed action plan in Step S1012 (Step S1012/No), it means that all the time is free time, so the processing proceeds to Step S1032 and the action plan creation unit 222 adds an action plan for free time to the schedule. In a case where there is no continuous free time of predetermined time or longer in the schedule in Step S1028 (Step S1028/No), the series of processing ends.

Note that, in the above description, the processing for adding an action plan for free time is performed until there is no continuous free time of predetermined time or longer; however, it is not limited thereto. Even in a state where continuous free time of predetermined time or longer remains, the action plan creation unit 222 may finish the series of processing without appropriately performing the processing for adding the action plan for free time.

Next, with reference to FIG. 10, the flow of the processing for adding an action plan for free time (Step S1032 of FIG. 9) is described.

In Step S1100 of FIG. 10, the action plan creation unit 222 checks whether or not there is a command given by the user regarding an action for free time. For example, in a case where the information processing terminal 10 has checked whether or not there is a command from the user in advance through spoken dialogue between the information processing terminal 10 and the user, the action plan creation unit 222 obtains the information from the information processing terminal 10. Further, in a case where the information processing terminal 10 has not checked whether or not there is a command from the user in advance through spoken dialogue between the information processing terminal 10 and the user, the action plan creation unit 222 may request the information processing terminal 10 to check whether or not there is a command from the user with respect to an action for free time.

In a case where there is a command from the user regarding an action for free time (Step S1100/Yes), the action plan creation unit 222 determines, in Step S1104, the details of a plan regarding an action for free time. For example, the action plan creation unit 222 determines the details of an action plan for free time by making various recommendations using various types of information such as the recommendation information, the user information, the spot information, the traffic information, the environmental information, or the like.

In Step S1100, in a case where there is no command from the user regarding an action for free time (Step S1100/No), the action plan creation unit 222 checks, in Step S1108, whether or not there is an action that can be recommended for free time on the basis of the lifestyle. For example, the action plan creation unit 222 checks whether or not there is an action (for example, eating, sleeping, bathing, reading, training, or the like) that is a regular action by the user in a period of time corresponding to free time. In a case where there is an action that can be recommended on the basis of the lifestyle (Step S1108/Yes), the action plan creation unit 222 recommends the action in Step S1112. Note that, in a case where there are a plurality of actions that can be recommended, the action plan creation unit 222 recommends at least one of the actions.

In Step S1108, in a case where there is no action that can be recommended on the basis of the lifestyle (Step S1108/No), the action plan creation unit 222 checks, in Step S1116, whether or not there is a task that can be recommended in the task list 212b. For example, in a case where it has been already determined that the user uses a facility near a certain station, the action plan creation unit 222 uses the spot information of the spot information DB 213 and the like to check whether or not there is a task that can be performed near the station in the task list 212b. If there is a task of shopping in the task list 212b and there is a commercial facility near the station, then the action plan creation unit 222 can recommend performing the task. Note that, in a case where there is a task that can be recommended in the task list 212b (Step S1116/Yes), the action plan creation unit 222 recommends performing the task in Step S1112. Note that, in a case where there are a plurality of tasks that can be recommended, the action plan creation unit 222 recommends performing at least one of the tasks.

In Step S1116, in a case where there is no task that can be recommended in the task list 212b (Step S1116/No), the action plan creation unit 222 checks, in Step S1120, whether or not there is an action that can be recommended on the basis of the spot information regarding a spot near an area where the user is present or an area through which the user passes. For example, in a case where it has been already determined that the user uses a facility near a certain station, the action plan creation unit 222 uses the spot information of the spot information DB 213 and the like to check whether or not there is an action that can be recommended near the station. In a case where there is an action that can be recommended on the basis of the spot information regarding a spot near an area where the user is present or an area through which the user passes (Step S1120/Yes), the action plan creation unit 222 recommends the action in Step S1112. Note that, in a case where there are a plurality of actions that can be recommended, the action plan creation unit 222 recommends at least one of the actions. Note that, in a case where, in Step S1120, there is no action that can be recommended on the basis of the spot information regarding a spot near an area where the user is present or an area through which the user passes (Step S1120/No), the processing ends with free time not occupied.

In Step S1124, the user selects an action to be added to the action plan from among the actions recommended by the action plan creation unit 222. Thereafter, in Step S1104, the action plan creation unit 222 determines the details of the plan regarding the selected action. In Step S1128, the action plan creation unit 222 adds the action plan of which details have been determined to the schedule, and the processing ends.

### (Specific Example of Processing for Creating Action Plan)

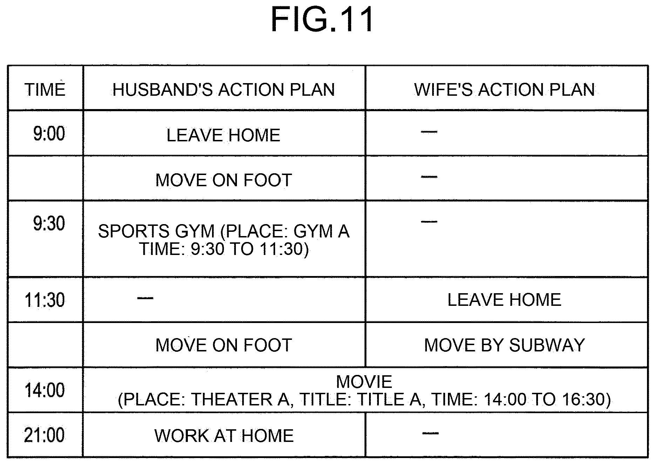

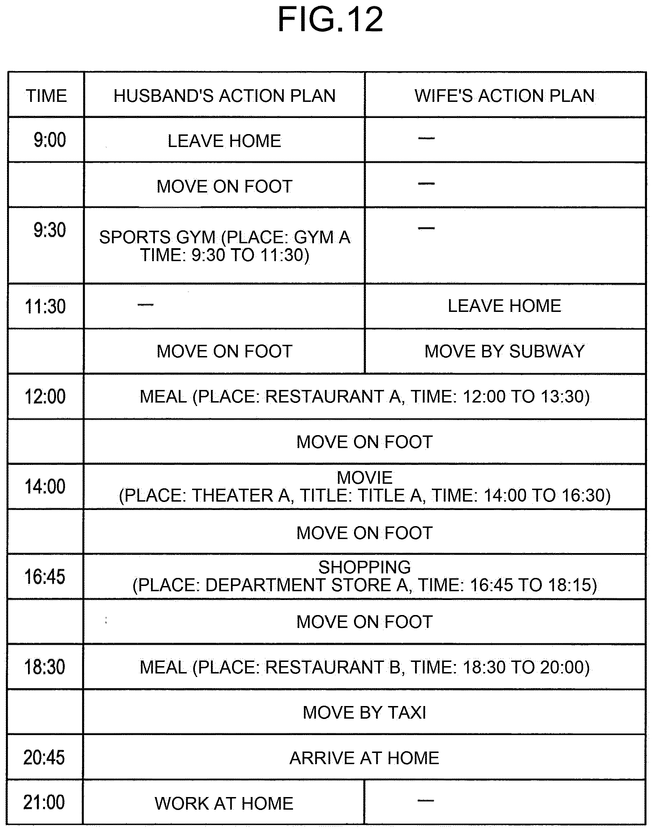

Subsequently, with reference to FIGS. 11 and 12, the specific example of the flow of processing for creating an action plan is described. More specifically, a case where an action plan of a married couple is created through spoken dialogue between the husband and the information processing terminal 10 is described. In the specific example described below, it is supposed that the subject that creates an action plan is the information processing server 20 and the information processing terminal 10 is controlled by the information processing server 20 to perform spoken dialogue. For example, the following specific example is assumed.

### . Specific Example (Until Confirmed Action Plan is Added to Schedule)

Husband: "Make a plan for today."

(The action plan creation unit 222 of the information processing server 20 analyzes sound from the husband to understand the utterance content, and starts creating an action plan for the husband. The action plan creation unit 222 checks whether or not there is a confirmed action plan.)

Information processing terminal 10: "Yes. Did you decide where to go?"

Husband: "For now, I'm going to the gym in the morning. And I want to see a movie with my wife. But I have to work at home from 21:00."

(The action plan creation unit 222 recognizes that going to the gym, seeing a movie, and working correspond to a confirmed action plan. Thereafter, the action plan creation unit 222 determines the details of the confirmed action plan on the basis of the relationship between the users, etc. At this time, in a case where a decision of the husband is needed for determination of the details, the action plan creation unit 222 asks the husband to make appropriate decisions.

Information processing terminal 10: "I understand. If you are with your wife, how about these movies?"

Husband: "Yeah, let us see a title A starting at 14:00."

(The action plan creation unit 222 determines the details of the movie and adds the action plan of seeing the movie to schedules of the husband and the wife. FIG. 11 shows the schedules after the confirmed action plan is added.)

The specific example of the processing until a confirmed action plan is added to a schedule is described above. Hereinafter, a specific example of the processing until an action plan for free time is added to a schedule is described.

### • Specific Example (Until Action Plan for Free Time is Added to Schedule)

(The action plan creation unit 222 confirms that there is continuous free time of a predetermined time or longer in the schedule to which the confirmed action plan has been added, and recommends an action for free time. For example, the action plan creation unit 222 recommends having lunch during free time before the start of the movie. At this time, the action plan creation unit 222 recommends a restaurant on the basis of the relationship between the users, the user information, the spot information, or the like.)

Information processing terminal 10: "Before the movie, how about meeting your wife and going to have lunch together. For example, these restaurants are recommended."

Husband: "Yeah, I like this restaurant. I'm meeting my wife at the station around 12:00."

(The action plan creation unit 222 continues to recommend actions for free time. For example, the action plan creation unit 222 recommends an action for free time on the basis of the task list 212b.)

Information processing terminal 10: "What will you do after the movie? The task list until this weekend has some tasks that have not yet been completed."

(The information processing terminal 10 acquires the task list 212b from the information processing server 20 and provides the husband with the task list 212b.)

Husband: "Oh, I forget to buy a birthday gift for my nephew. Where can I buy one?"

(The action plan creation unit 222 searches for a plurality of stores on the basis of the spot information, etc., and the information processing terminal 10 provides the husband with information regarding these stores.)

Information processing terminal 10: "Display stores selling goods for elementary school children near the movie theater."

Husband: "Well, I stop at a department store A, then."

(The action plan creation unit 222 adds the action plan for free time to the schedule. The action plan creation unit 222 then continues to recommend an action for free time. For example, the action plan creation unit 222 recommends having dinner in free time after shopping. At this time, the action plan creation unit 222 recommends a restaurant on the basis of the relationship between the users, the user information, the spot information, or the like.)

Information processing terminal 10: "How about having dinner after shopping. For example, these restaurants are recommended."

Husband: "I think we are having dinner before going home. Let's go to this restaurant."

(The action plan creation unit 222 adds the action plan for free time to the schedule. At this time, the control unit 220 may make a reservation for the restaurant as appropriate, and so on. Further, the action plan creation unit 222 confirms that bad weather is expected on the basis of the environmental information, and recommends a means of transportation ensuring that the husband and the wife arrive at home before expected time of arrival on the basis of the traffic information.)

Information processing terminal 10: "The weather is likely to be bad temporarily at night, so if you take a train, you might be late for work. If the dinner is over 20:30, it seems that you may use a taxi on the way back to home."

Husband: "Thank you."

(The action plan creation unit 222 adds the action plan for free time to the schedule. FIG. 12 shows a schedule after the action plan for free time has been added.)

### (Processing for Changing Action Plan)

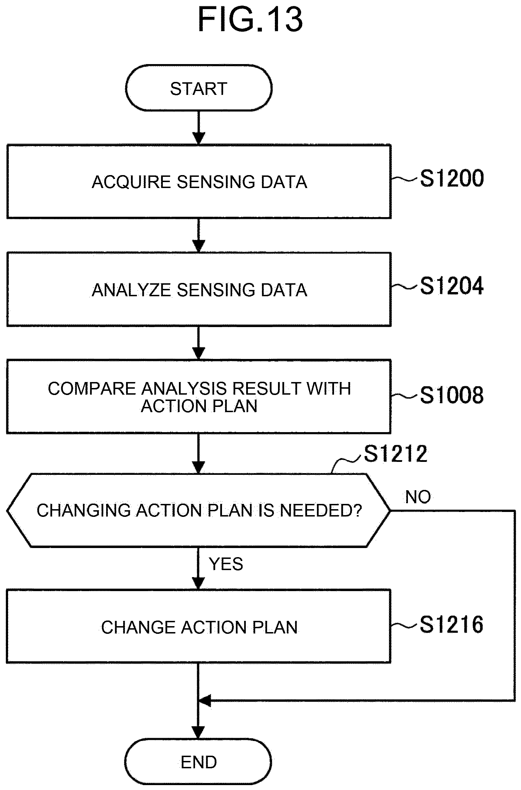

The specific example of the processing until an action plan for free time is added to a schedule is described above. Subsequently, the processing for changing the action plan is described with reference to FIG. 13.

In Step S1200 of FIG. 13, the plan execution confirmation unit 223 of the information processing server 20 acquires sensing data collected by the information processing terminal 10 and the like. After that, the plan execution confirmation unit 223 analyzes the sensing data in Step S1204 and compares the analysis result with the action plan in Step S1208 to determine whether or not the action plan is appropriately carried out, or determine whether or not the action plan can be carried out. In Step S1212, the plan execution confirmation unit 223 determines whether or not it is necessary to change the action plan. In a case where it is necessary to change the action plan (Step S1212/Yes), the action plan creation unit 222 changes the action plan in Step S1216. In a case where it is not necessary to change the action plan (Step S1212/No), the processing ends.

The information processing server 20 repeatedly performs the processing of FIG. 13; thereby to change the action plan more appropriately. Note that the time at which the processing of FIG. 13 is performed and so on is not particularly limited. For example, the information processing server 20 may periodically perform the processing of FIG. 13 or may perform the processing of FIG. 13 at specific time. In addition, the information processing server 20 may repeat the processing of FIG. 13 more often at the time near the start time or end time of a certain action in the action plan, as compared to the time other than the time. Thereby, the information processing server 20 can immediately change the action plan in a case where the start time or the end time of the action is not in accordance with the action plan.

### (Specific Example of Processing for Changing Action Plan)

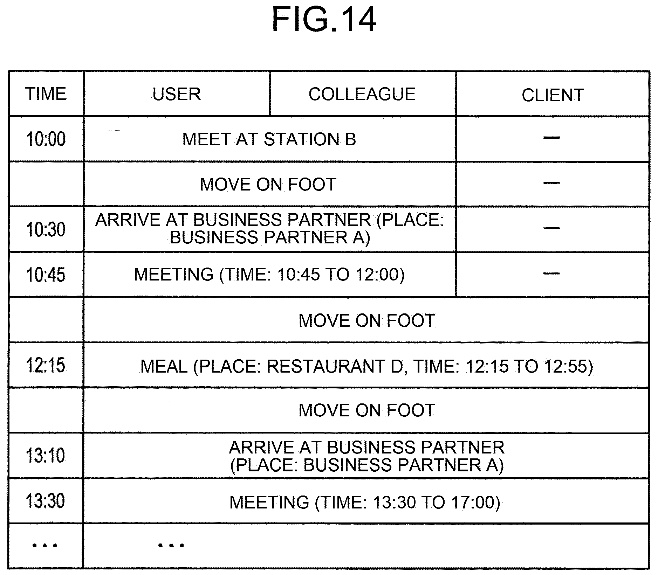

Subsequently, a specific example of the flow of the processing for changing an action plan is described with reference to FIG. 14 to FIG. 18. More specifically, a case where an action plan for a user, a colleague, and a client is changed is described. For example, it is assumed that an action plan as illustrated in FIG. 14 is created in advance.

### • Specific Example

(The plan execution confirmation unit 223 of the information processing server 20 checks whether or not a user and a colleague can meet at a station B according to the action plan on the basis of the sensing data and so on. For example, the plan execution confirmation unit 223 recognizes that the colleague has missed a train and calculates estimated time of arrival of the colleague on the basis of the sensing data, the traffic information, etc.)

Information processing terminal 10: "Mr. Sato (colleague) seems to have missed the train. He is expected to arrive at 10:10."

User: "Well, are we in time for the appointment with the business partner?"

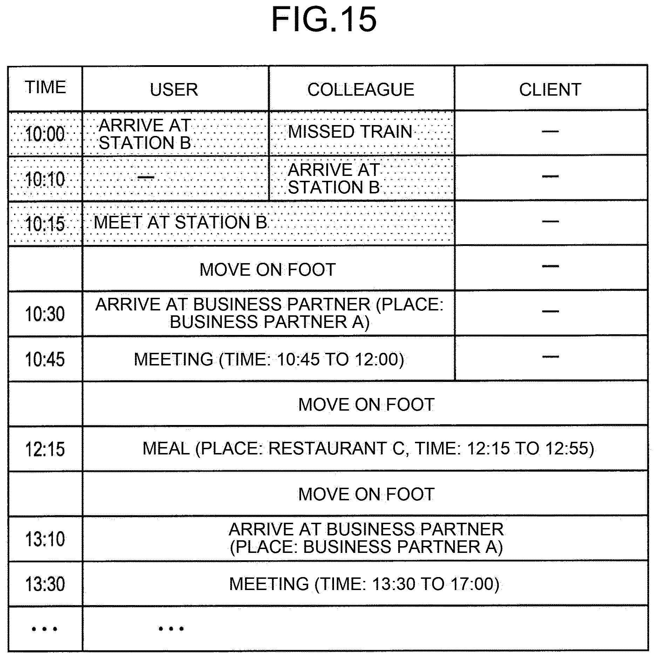

(The plan execution confirmation unit 223 calculates latest departure time so that the user can arrive at the business partner by the expected time of arrival in the action plan on the basis of the sensing data, the traffic information, etc. The action plan creation unit 222 changes the action plan regarding meeting time, etc., as illustrated in FIG. 15)

Information processing terminal 10: "If Mr. Sato comes here before 10:15, you can arrive 5 minutes before the appointment."

User: "Well, I see."

(For example, on the basis of the sensing data, the traffic information, etc., the plan execution confirmation unit 223 recognizes that the train on which the colleague takes has stopped due to an accident, and it is uncertain when the train is restored. The plan execution confirmation unit 223 calculates latest departure time for the user to arrive at the business partner before the estimated time of arrival in the action plan.)

Information processing terminal 10: "The train on which Mr. Sato takes seems to have stopped due to an accident. The train has been halted indefinitely. It seems better to go to the business partner first, but if you move by taxi, you will be in time even if you wait for him here by 10:20."

User: "OK, we will go together by taxi, then."

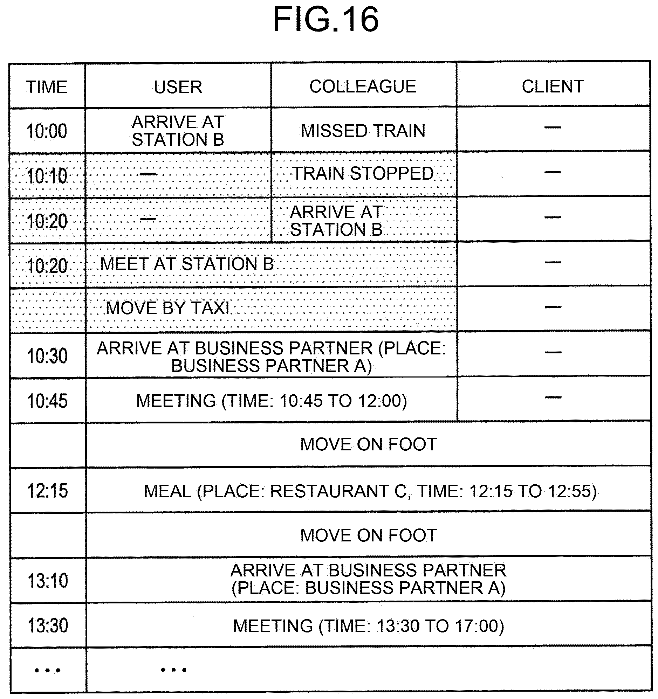

(The action plan creation unit 222 changes the action plan regarding meeting time, a means of transportation, etc., as illustrated in the highlighted section of FIG. 16. Further, the control unit 220 books a taxi.)

Information processing terminal 10: "Booked a taxi, which arrives here at 10:20."

(For example, the plan execution confirmation unit 223 recognizes that the train has been restored on the basis of the sensing data, the traffic information, etc., and calculates the estimated time of arrival of the colleague. Further, the plan execution confirmation unit 223 calculates the estimated time of arrival of the taxi on the basis of the traffic information, etc.)

Information processing terminal 10: "The train on which Mr. Sato takes has been restored. It will arrive at 10:20. A taxi will arrive by 10:20, so you can arrive at the business partner before 10:30 as originally planned."

(Thereby, it is assumed that the user and the colleague arrives at the business partner at 10:30 as originally planned, and have a meeting with a client from 10:45 to 12:00. It is then assumed that, for example, before they move to a restaurant C for lunch, it is found that having a meal at the restaurant C is not appropriate for the convenience of the client.)

User: "Mr. Matsumoto (client) of the business partner seems to have carbohydrate restriction. Are there any other good restaurants?"

(The action plan creation unit 222 recommends another restaurant on the basis of the relationship between the users, the user information, the spot information, or the like.)

Information processing terminal 10: "There is a restaurant D nearby. How about this?"

User: "Sounds good. Will we be in time for the afternoon meeting?"

(The action plan creation unit 222 calculates the estimated time of arrival to the restaurant D and the estimated time of departure from the restaurant D in order to return to the business partner at the time according to the action plan on the basis of the spot information, the traffic information, or the like. Further, for example, the action plan creation unit 222 confirms the mixed situation of the restaurant D at the estimated time of arrival to the restaurant D on the basis of the spot information.)

Information processing terminal 10: "Since the restaurant D is closer than the planned restaurant, you should be able to stay there for one hour, but the restaurant seems to be crowded at this time."

User: "But it looks good, so we'll go there."

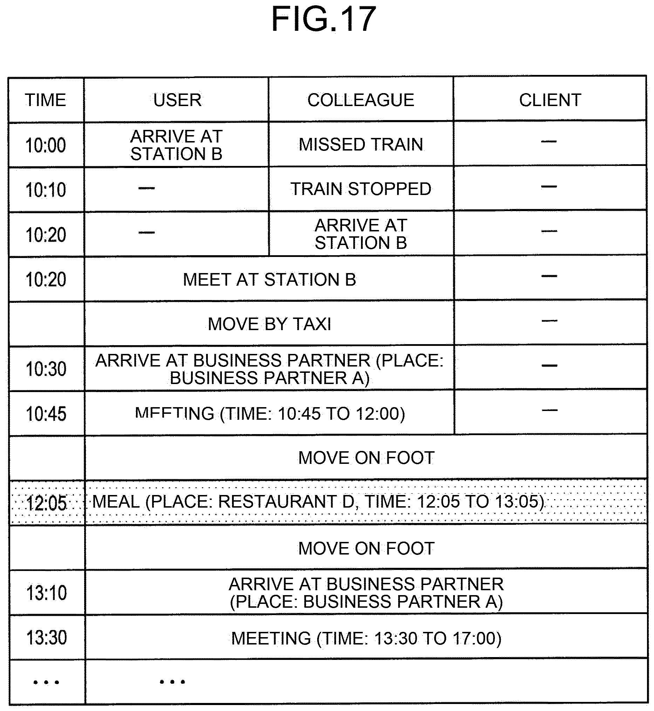

(The action plan creation unit 222 changes the action plan regarding the meal as illustrated in the highlighted section of FIG. 17. After that, it is assumed that, for example, the users arrive at the restaurant D; however, cannot enter the restaurant D to wait for their turn outside due to an unexpected crowded situation.)

User: "I wonder whether we can be in time for the afternoon meeting."

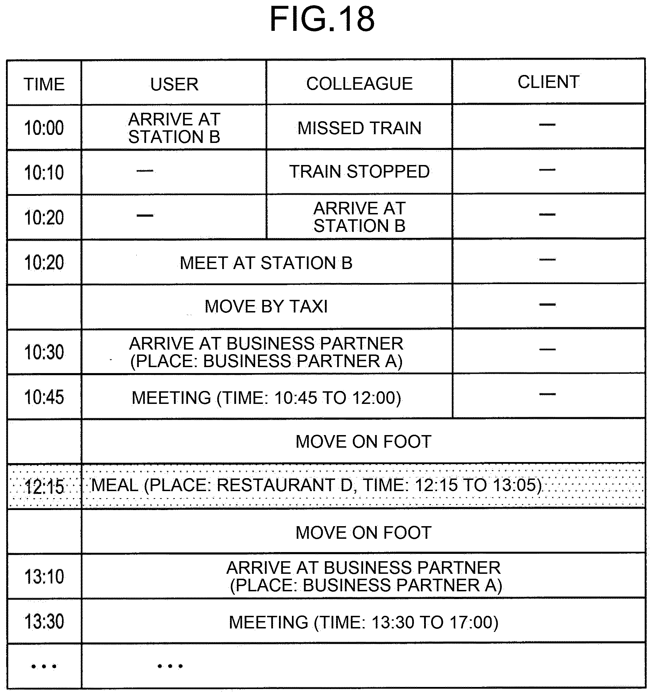

(The plan execution confirmation unit 223 confirms the average length of stay at the restaurant D from the spot information, and calculates ideal time of entry on the basis of the average length of stay and the estimated time of departure from the restaurant D. The action plan creation unit 222 then changes the action plan regarding the meal time as illustrated in the highlighted section of FIG. 18.

Information processing terminal 10: "The average length of stay at the restaurant D is 50 minutes, so if you can get in before 12:15, you can leave at 13:05 as planned and you will be in time for the afternoon meeting."

User: "All right, thank you."

(After that, for example, it is assumed that the users enter the restaurant at 12:15.)

User: "What time should we leave?"

(The plan execution confirmation unit 223 checks the action plan to confirm the estimated time of departure from the restaurant D.)

Information processing terminal 10: "At 13:05. You can have a meal for 50 minutes."

User: "All right, thank you."

### (Specific Example of Processing for Creating Action Plan of Unknown Person)

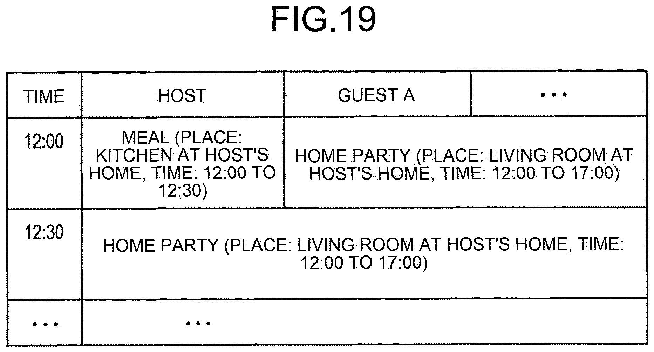

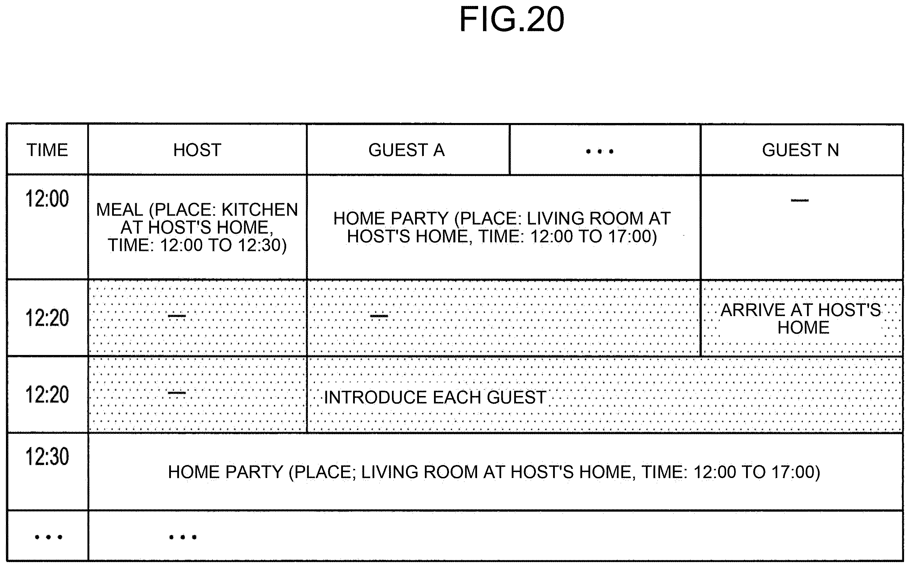

The specific example of the flow of the processing for changing the action plan is described above. Subsequently, a specific example of the flow of the processing for creating an action plan of an unknown person is described with reference to FIG. 19 and FIG. 20. More specifically, the description is given by taking an example where a host has a home party with a plurality of guests and a guest N joins late.

### • Specific Example

(For example, it is assumed that an action plan as illustrated in FIG. 19 is created in advance. The guest N arrives at the host's house. The information processing terminal 10, for example, analyzes an image of the guest N taken to recognize that this is the first visit for the guest N to the host's house.)

Information processing terminal 10: "Hello, this is your first time here. May I have your name please?"

Guest N: "I am Sato (guest N), a colleague of Hirofumi (host)."

(The action plan creation unit 222 adds the guest N to the action plan, and informs the host of the arrival of the guest N via a headset worn by the host.)

Information processing terminal 10: "Hirofumi, a colleague named Mr. Sato has just arrived."

Host: "All right, I am busy with cooking now, so please ask him to wait for 10 minutes."

(The action plan creation unit 222 informs the guest N of the message from the host. At this time, for example, the action plan creation unit 222 estimates a relationship between the users (relationship between the guests) and, on the basis of the estimation result of the relationship (for example, "first time meeting", etc.), adds an action plan which can be recommended for free time (for example, "introduction of each guest") to the schedule. Referring to FIG. 20, a schedule after the action plan which can be recommended for free time is added is illustrated.)

Information processing terminal 10: "Mr. Sato, Hirofumi is preparing for food now, so would you please wait for 10 minutes or so. In the meantime, we will introduce other guests who are coming here today."

### <2. Hardware configuration>

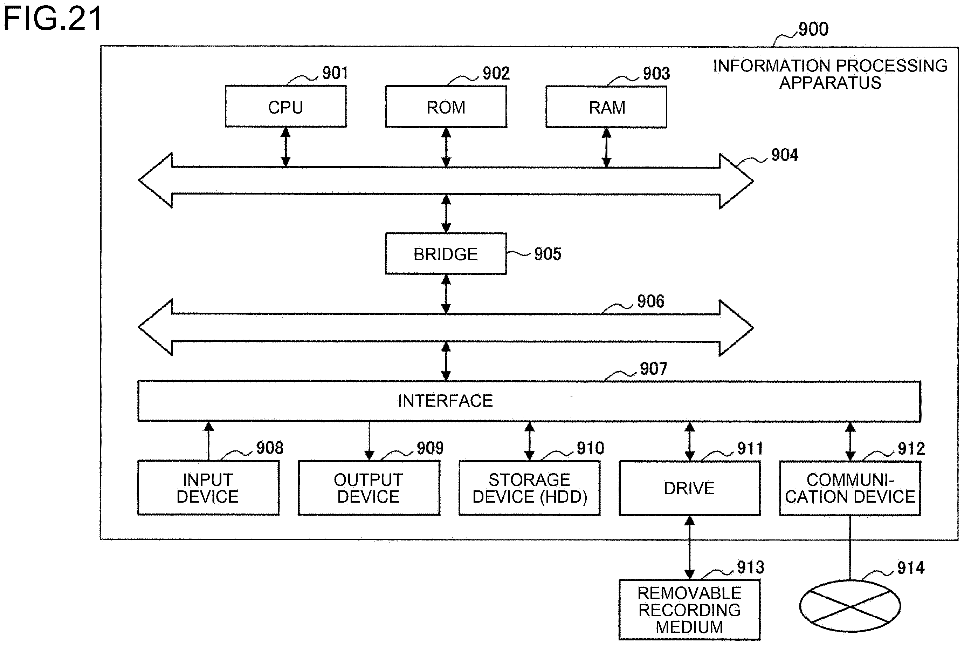

An embodiment of the present disclosure has been described above. Next, with reference to FIG. 21, an example of hardware configuration common in the information processing terminal 10 and the information processing server 20 according to an embodiment of the present disclosure will be described below.

FIG. 21 is a diagram illustrating a hardware configuration of the information processing apparatus 900 embodying an information processing terminal 10 and an information processing server 20. The information processing apparatus 900 includes a central processing unit (CPU) 901, a read only memory (ROM) 902, a random access memory (RAM) 903, and a host bus 904, a bridge 905, an external bus 906, an interface 907, an input device 908, an output device 909, a storage device (HDD) 910, a drive 911, and a communication device 912.

The CPU 901 functions as an arithmetic processing device and a control device, and controls the overall operation in the information processing apparatus 900 in accordance with various programs. In addition, the CPU 901 may be a microprocessor. The ROM 902 stores programs, operation parameters and the like used by the CPU 901. The RAM 903 temporarily stores programs used in execution of the CPU 901, parameters appropriately changed in the execution, and the like. These components are interconnected via the host bus 904 formed by a CPU bus or the like. Each function of the control unit 160, the image capturing unit 140, and the sensor unit 150 of the information processing terminal 10, and the control unit 220 of the information processing server 20 is achieved by cooperation of the CPU 901, the ROM 902, and the RAM 903.

The host bus 904 is connected to the external bus 906 such as a peripheral component interconnect/interface (PCI) bus through the bridge 905. Note that the host bus 904, the bridge 905, and the external bus 906 are not necessarily configured as separate components, and their functions may be incorporated into a single bus.

The input device 908 includes input means for the user to input information, such as a mouse, a keyboard, a touch panel, a button, a microphone, a switch, and a lever, an input control circuit that generates an input signal on the basis of the input by the user and outputs it to the CPU 901, and the like. The user of the information processing apparatus 900 can input various types of data and instruct processing operations to each device by operating the input device 908. Each function of the sound input unit 130 of the information processing terminal 10 is achieved by the input device 908.

The output device 909 includes, for example, a display device such as a cathode ray tube (CRT) display device, a liquid crystal display (LCD) device, an organic light emitting diode (OLED) device, and a lamp. Further, the output device 909 includes a sound output device such as a speaker and a headphone. The output device 909 outputs, for example, reproduced contents. Specifically, the display device displays various types of information such as reproduced video data by text or images. On the other hand, the sound output device converts reproduced sound data or the like into sound and outputs it. Each function of the display unit 110 and the sound output unit 120 of the information processing terminal 10 is achieved by the output device 909.

The storage device 910 is a device for storing data. The storage device 910 may include a recording medium, a recording device that records data in the recording medium, a readout device that reads out data from the recording medium, a deletion device that deletes data recorded in the recording medium, and the like. This storage device 910 includes, for example, a hard disk drive (HDD). This storage device 910 drives a hard disk, and stores a program executed by the CPU 901 and various types of data. Each function of the storage unit 180 of the information processing terminal 10 and the storage unit 210 of the information processing server 20 is achieved by the storage device 910.

The drive 911 is a reader-writer for a recording medium, and is built in or externally attached to the information processing apparatus 900. The drive 911 reads out information recorded in a removable recording medium 913 such as a magnetic disk, an optical disk, a magneto-optical disk, or a semiconductor memory being mounted, and outputs the information to the RAM 903. In addition, the drive 911 can also write information into the removable recording medium 913.

The communication device 912 is, for example, a communication interface including a communication device or the like for connection to a communication network 914. The function of the communication unit 170 of the information processing terminal 10 and the communication unit 230 of the information processing server 20 is achieved by the communication device 912.

### <3. Summary>

As described above, the information processing server 20 can estimate a relationship among a plurality of users on the basis of various types of information such as sensing data provided by the information processing terminal 10 to create an action plan of the plurality of users on the basis of the estimation result and so on. With this arrangement, for example, even in a case where identifying a user is difficult or even in a case where identifying a user is successful; however, preference information of the user or the like is unknown, a more appropriate action plan can be created on the basis of the relationship among the users. In addition, the information processing server 20 analyzes various types of information such as the sensing data to check whether or not the created action plan is properly carried out or whether or not the action plan can be carried out, and can determine whether or not it is necessary to change the action plan. Then, in a case where it is necessary to change the action plan, the information processing server 20 can change the action plan of each user on the basis of the estimation result of the relationship among the users and the like.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, it is not always necessary to process the respective steps in the operation in time series in the order illustrated as the flowcharts or the sequence diagrams. That is, the respective steps illustrated in the flowcharts or the sequence diagrams may be processed in an order different from the order, or may be processed in parallel, according to necessity.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing apparatus comprising:
   a relationship estimation unit configured to estimate a relationship among a plurality of users on the basis of sensing data; and
   an action plan creation unit configured to create an action plan of the plurality of users on the basis of a result of the estimation.
(2) The information processing apparatus according to (1), wherein
   the action plan creation unit creates the action plan including a plan for the plurality of users to act together.
(3) The information processing apparatus according to (1) or (2), wherein
   the action plan creation unit creates the action plan including a plan for the plurality of users to act when the plurality of users goes out.
(4) The information processing apparatus according to (3), wherein
   the action plan creation unit creates the action plan also on the basis of spot information including information regarding a spot where the plurality of users goes out, traffic information including information regarding transportation used when the plurality of users goes out, or environmental information including information regarding environment of a place where the plurality of users goes out.
(5) The information processing apparatus according to any one of (1) to (4), wherein
   the relationship estimation unit identifies at least one user of the plurality of users.
(6) The information processing apparatus according to (5), wherein the action plan creation unit creates the action plan also on the basis of preference information of the user identified.
(7) The information processing apparatus according to (5) or (6), wherein
   the action plan creation unit creates the action plan also on the basis of a task list of the user identified.
(8) The information processing apparatus according to any one of (1) to (7), wherein
   the action plan creation unit creates an action plan in a period of time other than a period of time for which a confirmed action is planned.
(9) The information processing apparatus according to any one of (1) to (8), further comprising
   a plan execution confirmation unit configured to confirm, on the basis of the sensing data, whether or not the action plan is carried out, or whether or not the action plan can be carried out.
(10) The information processing apparatus according to (9), wherein
   the action plan creation unit changes or re-creates the action plan on the basis of a result of the confirmation.
(11) The information processing apparatus according to any one of (1) to (10), wherein
   the relationship includes a family relationship, a marital relationship, a parent-child relationship, a relative, a couple relationship, a friendship, a business relationship, a mentor-mentee relationship, a teacher-student relationship, a manager or coach-player relationship, and a relationship between a service provider and a service recipient.
(12) The information processing apparatus according to any one of (1) to (11), wherein
   the information processing apparatus is an agent device that performs spoken dialogue, or the information processing apparatus cooperates with an agent device that performs the spoken dialogue, and the information processing apparatus creates the action plan.
(13) An information processing method comprising:
   estimating, by a processor, a relationship among a plurality of users on the basis of sensing data; and
   creating an action plan of the plurality of users on the basis of a result of the estimation.
(14) An information processing apparatus comprising:
   a transmission unit configured to transmit sensing data; and
   a reception unit configured to receive, in response to a relationship among a plurality of users estimated on the basis of the sensing data, information regarding an action plan of the plurality of users created on the basis of a result of the estimation.

### Reference Signs List

- 10: Information processing terminal
- 110: Display unit
- 120: Sound output unit
- 130: Sound input unit
- 140: Image capturing unit
- 150: Sensor unit
- 160: Control unit
- 170: Communication unit
- 180: Storage unit
- 20: Information processing server
- 210: Storage unit
- 211: Recommendation information DB
- 212: User information DB
- 212a: Preference information
- 212b: Task list
- 213: Spot information DB
- 214: Traffic information DB
- 215: Environmental information DB
- 220: Control unit
- 221: Relationship estimation unit
- 222: Action plan creation unit
- 223: Plan execution confirmation unit
- 224: Information collection unit
- 230: Communication unit
- 30: Network

## Claims

1. An information processing apparatus comprising:
a relationship estimation unit configured to estimate a relationship among a plurality of users on the basis of sensing data; and
an action plan creation unit configured to create an action plan of the plurality of users on the basis of a result of the estimation.

2. The information processing apparatus according to claim 1, wherein
the action plan creation unit creates the action plan including a plan for the plurality of users to act together.

3. The information processing apparatus according to claim 1, wherein
the action plan creation unit creates the action plan including a plan for the plurality of users to act when the plurality of users goes out.

4. The information processing apparatus according to claim 3, wherein
the action plan creation unit creates the action plan also on the basis of spot information including information regarding a spot where the plurality of users goes out, traffic information including information regarding transportation used when the plurality of users goes out, or environmental information including information regarding environment of a place where the plurality of users goes out.

5. The information processing apparatus according to claim 1, wherein
the relationship estimation unit identifies at least one user of the plurality of users.

6. The information processing apparatus according to claim 5, wherein the action plan creation unit creates the action plan also on the basis of preference information of the user identified.

7. The information processing apparatus according to claim 5, wherein
the action plan creation unit creates the action plan also on the basis of a task list of the user identified.

8. The information processing apparatus according to claim 1, wherein
the action plan creation unit creates an action plan in a period of time other than a period of time for which a confirmed action is planned.

9. The information processing apparatus according to claim 1, further comprising
a plan execution confirmation unit configured to confirm, on the basis of the sensing data, whether or not the action plan is carried out, or whether or not the action plan can be carried out.

10. The information processing apparatus according to claim 9, wherein
the action plan creation unit changes or re-creates the action plan on the basis of a result of the confirmation.

11. The information processing apparatus according to claim 1, wherein
the relationship includes a family relationship, a marital relationship, a parent-child relationship, a relative, a couple relationship, a friendship, a business relationship, a mentor-mentee relationship, a teacher-student relationship, a manager or coach-player relationship, and a relationship between a service provider and a service recipient.

12. The information processing apparatus according to claim 1, wherein
the information processing apparatus is an agent device that performs spoken dialogue, or the information processing apparatus cooperates with an agent device that performs the spoken dialogue, and the information processing apparatus creates the action plan.

13. An information processing method comprising:
estimating, by a processor, a relationship among a plurality of users on the basis of sensing data; and
creating an action plan of the plurality of users on the basis of a result of the estimation.

14. An information processing apparatus comprising:
a transmission unit configured to transmit sensing data; and
a reception unit configured to receive, in response to a relationship among a plurality of users estimated on the basis of the sensing data, information regarding an action plan of the plurality of users created on the basis of a result of the estimation.
